# DEMANDE DE BREVET EUROPEEN

(11) **EP 0 749 791 A1**
(43) Date de publication de la demande: **27.12.1996**
(21) Numéro de dépôt: 96401308.0
(22) Date de dépôt: 17.06.1996
(51) Int. Cl.: B22F 3/23, C22C 1/04, B22F 3/12

(54) **Procédé de mise en forme par frittage réactif de matériaux intermetalliques**

(30) Priorité: 19.06.1995 FR 9507283
(71) Demandeur: COMMISSARIAT A L'ENERGIE ATOMIQUE, 75015 Paris Cédex 15 (FR)
(72) Inventeur: Bigay, Yves, 91370 Verrieres-le-Buisson (FR)
(74) Mandataire: Dubois-Chabert, Guy

(57) **Abrégé**

L'invention a trait à un procédé de mise en forme par frittage réactif de matériaux intermétalliques tels que TiNi, TiAl qui comprend la préparation d'un mélange de poudres métalliques élémentaires dans les proportions voulues (1) (2), la compression (3) du mélange de poudres élémentaires pour obtenir un comprimé de ces poudres, puis le gainage (4) de ce comprimé de poudres dans une gaine résistant à la pression et à la chaleur, le produit gainé étant ensuite soumis à un frittage réactif (5) pour obtenir le composé intermétallique et à une opération de densification finale à chaud (6). La gaine est ensuite généralement éliminée (7).

## Description

L'invention a pour objet un procédé de mise en forme par frittage réactif de matériaux intermétalliques à partir de poudres élémentaires.

Les matériaux intermétalliques sont des composés définis à structure ordonnée de métaux mettant en jeu des liaisons complexes et des structures cristallines compliquées.

Ces matériaux, par exemple les aluminures de titane présentent pour la plupart des propriétés telles que faible densité, grande résistance à l'oxydation et ténacité à chaud qui les rendent susceptibles d'application dans de nombreux domaines de l'industrie où de telles propriétés sont recherchées, notamment les industries aéronautiques et spatiales. Toutefois, malgré leur intérêt, ces matériaux intermétalliques présentent l'inconvénient d'être difficiles à mettre en forme.

Ainsi, la mise en forme de matériaux intermétalliques par la voie classique de la fusion, pose-t-elle les problèmes suivants : il est difficile de contrôler la composition chimique d'une fusion à une autre, à cause des différences souvent importantes de températures de fusion et de tension d'évaporation existant entre les éléments chimiques; par exemple dans le cas de TiAl, le titane fond à 1668°C et l'aluminium fond à 660°C.

Ces écarts de composition sont particulièrement préjudiciables dans le cas des matériaux intermétalliques, car ils entraînent des variations des propriétés finales importantes.

Il est également difficile de contrôler la microstructure du matériau obtenu. En effet, la fusion entraîne la formation de gros grains, de dendrites et d'hétérogénéité chimique au sein d'un même lingot. Ces difficultés entraînent la nécessité de faire suivre la mise en forme d'une gamme de transformation à chaud importante : forgeage, filage et laminage afin de casser ces grains et d'homogénéiser le lingot.

Enfin, les matériaux ainsi mis en forme présentent des difficultés de transformation à chaud et à froid. En effet, du fait de la nature "fragile" des matériaux intermétalliques, mais aussi à cause de la microstructure grossière de fusion, ces matériaux sont très difficiles à transformer. Ils nécessitent des températures élevées, de faibles vitesses de déformation, ce qui entraîne des problèmes de refroidissement qui impliquent de travailler dans des conditions isothermes et à de faibles taux de déformation.

En conséquence, de nombreuses passes et une longue gamme de traitement sont nécessaires.

Les matériaux intermétalliques peuvent également être mis en forme par la technique classique de métallurgie des poudres, à savoir par mélange des poudres, formage par exemple par compression à froid, et frittage, les poudres mises en oeuvre étant des poudres préalliées. Cette technique, si elle permet de résoudre les problèmes de contrôle de composition chimique et de microstructure, présente par contre les difficultés d'une part d'un coût élevé, car il est difficile d'obtenir des poudres préalliées de composés intermétalliques de bonne qualité chimique - il est nécessaire en effet de fabriquer un lingot qui est ensuite atomisé - d'autre part d'une mise en forme très délicate, car ces poudres intermétalliques sont dures et fragiles.

La métallurgie des poudres par frittage réactif utilise des poudres élémentaires facilement disponibles et d'un coût peu élevé et élimine de ce fait l'un des inconvénients du frittage classique. Comme dans le cas des poudres préalliées, le frittage réactif permet un bon contrôle de la composition chimique. Cette technique permet aussi, grâce à la ductilité des poudres élémentaires, une mise en forme aisée par filage, laminage ou autre avant d'avoir effectué la réaction chimique. Après la réaction ayant conduit à la synthèse du composé, le produit obtenu présente une fine microstructure homogène. Cependant, ce procédé présente un certain nombre de difficultés dont les principales résident dans : un contrôle difficile de la réaction, une oxydation plus importante du produit au cours de la fabrication qui pénalise fortement les propriétés finales, et enfin une porosité résiduelle qui limite de façon importante les propriétés mécaniques.

Ces difficultés conduisent à ce que, dans la pratique, ce procédé est limité à la fabrication de petites pièces, de faible épaisseur, à cause de la difficulté de contrôler la réaction, il nécessite également un travail sous vide poussé pour limiter l'oxydation, et enfin il exige d'opérer avec des poudres très fines ou ayant subi un corroyage et donc chargées en oxygène, pour limiter la porosité de Kirkendall.

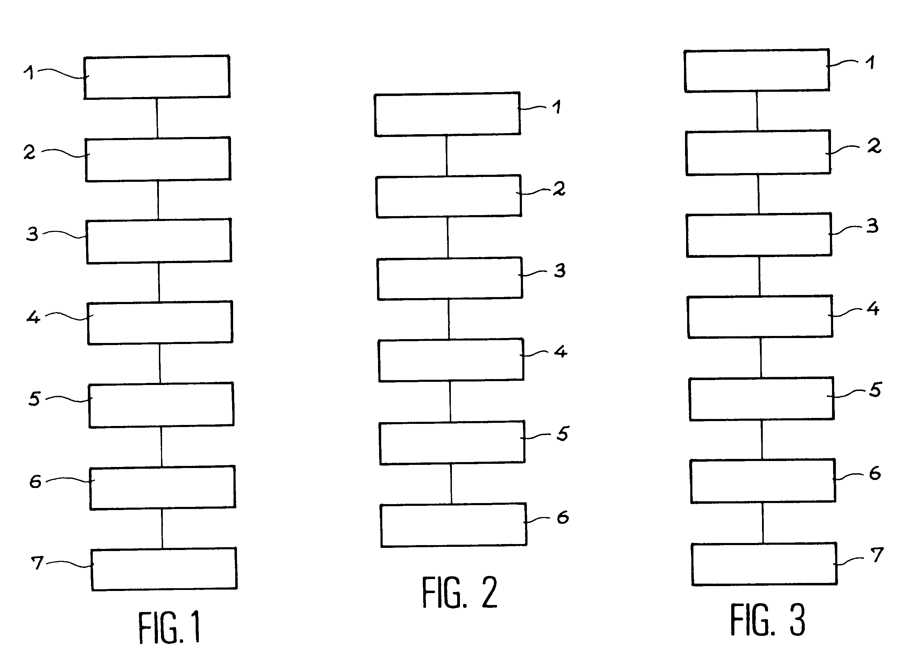

Ainsi, le document V.I. ITIN, V.N. KHACHIN, V.E. GYUNTER, A.D. BRATCHIKOV et D.B. CHERNOV : "Production of Titanium Nickelide by self-propagating high temperature synthesis" traduit de "Poroshkovaya Metallurgiya, n° 3(243), pp.4-6, March, 1983" décrit-il un procédé pour préparer des nickelures de titane dans lequel des poudres élémentaires (1) de titane et de nickel sont mélangées dans les proportions convenables (2) et comprimées à froid (3) pour former un flan qui est soumis à un frittage réactif (4) dans un réacteur à pression constante sous atmosphère d'argon, refroidi, puis placé dans une gaine d'acier (5) et extrudé, filé à 950°C, (6) afin de réduire la porosité, la gaine est ensuite éliminée. Ce procédé est illustré à la Fig. 1.

Le brevet GB-A-2 220 425 est relatif à un procédé de préparation et de mise en forme de matériaux intermétalliques tels que NiAl, CoAl, NiAlCr, Co₂TiAl, NbAl₃, NbNiAl, TiAl, Ti₃Al, Ni₃Al, CuZnAl, NiTi, Nb₃Sn.

Ces matériaux sont préparés par mélange des poudres élémentaires en quantités déterminées qui sont tout d'abord mises en forme par compression à froid, puis soumises à une seconde opération de compression ou de compactage notamment par extrusion conduite de telle sorte que le taux de déformation du mélange soit supérieur à 80 % afin de réduire la porosité ; enfin, le matériau final est préparé par frittage-réaction. L'article de M. DAHMS : "Formation of Titanium Aluminides by heat treatment of extruded elemental powders" dans "Materials Science and Engineering, A 110 (1989),LS-L8" décrit la formation d'aluminures de titane à partir de poudres élémentaires dans lequel des mélanges dans les proportions voulues de poudres élémentaires de titane et d'aluminium sont soumises à une compression puis extrudées à froid et filées, afin de produire des barres et fils densifiés qui sont ensuite soumis à un frittage réactif dans une atmosphère d'argon pour donner le produit final TiAl. Il apparaît que la déformation supplémentaire fournie par l'extrusion et le filage conduit à une porosité moindre dans le matériau fritté. L'article de K.B. MUELLER, S. NEUBERT, M. DAHMS : "Production of intermetallic TiAl by solid state reaction of extruded powders" (pp. 139-153) dans l'ouvrage "Advance in Powder metallurgy and Particulate Materials -1992, Volume 7", est relatif à la préparation de TiAl par un procédé comprenant le mélange (2) de poudres élémentaires (1) de Ti et de Al dans des proportions spécifiques, puis une étape de compression (3) pour obtenir un cylindre qui est soumis à une déformation par extrusion à une basse température inférieure à la température de réaction utilisant diverses techniques (filage, laminage) (5) . De préférence, l'extrusion est réalisée après que le cylindre ait été enfermé dans une gaine en alliage d'aluminium AlMgSi0,5 (4). Après extrusion, on procède au frittage-réaction (6) conduisant à la formation de la phase intermétallique. Ce procédé est décrit à la figure 2.

Toutefois, ces procédés ne sont pas encore totalement satisfaisants par nombre de leurs aspects : en effet, le frittage réactif doit, afin de réaliser la protection des poudres pendant cette opération, être effectué dans des fours fonctionnant sous vide ou bien dans une atmosphère contrôlée constituée par un gaz inerte, ce qui nécessite une mise en oeuvre coûteuse et difficile. D'autre part, la porosité des produits finaux n'est pas, dans la plupart des cas, satisfaisante.

L'objectif de la présente demande est de fournir un procédé de frittage réactif pour obtenir des matériaux intermétalliques qui remédie aux inconvénients des procédés connus, c'est-à-dire un procédé dans lequel on puisse effectuer un contrôle facile de la réaction chimique qui se déroule, dans lequel on puisse protéger le produit de manière efficace et à tous les stades de l'oxydation, sans que cela ne nécessite la mise en oeuvre d'appareillages spécifiques ou de conditions particulières telles que vide poussé ou atmosphère inerte contrôlée. Ce procédé doit également permettre de limiter la porosité résiduelle ou porosité de Kirkendall. Ce procédé doit également être facile à mettre en oeuvre sur un plan industriel, présenter une flexibilité lui permettant d'être adapté rapidement à la fabrication de pièces différentes par leur forme et la composition du matériau intermétallique les constituant. Ce procédé doit enfin pouvoir être réalisé avec des appareillages courants, avec une faible consommation d'énergie, des produits de départ peu coûteux et facilement disponibles.

Le produit final intermétallique obtenu par le procédé doit d'autre part présenter les propriétés structurales et mécaniques voulues et être apte à la transformation à chaud et à froid.

Ces objectifs et d'autres encore sont atteints par le procédé de l'invention de mise en forme par frittage réactif de matériaux intermétalliques comprenant la succession des étapes suivantes :
- préparation d'un mélange de poudres métalliques élémentaires dans les proportions voulues,
- compression du mélange de poudre pour obtenir un comprimé ou "compacté" de poudres, ce comprimé ou "compacté" de poudre élémentaire étant éventuellement mis en forme à basse température, ce procédé étant caractérisé en ce que le compacté de poudres élémentaires mis ou non en forme subit ensuite une opération de gainage dans une gaine résistant à la pression et à la chaleur et en ce que le produit gainé est traité par frittage réactif dans des conditions permettant l'obtention du composé intermétallique.

Grâce au gainage, lors du frittage réactif, le compacté de poudre présente une porosité de seulement quelques pour-cent.

La porosité est ensuite éliminée par une étape de densification finale à chaud consistant par exemple en une transformation à chaud ou en une compression à chaud. Le gainage est enfin généralement enlevé dans une étape finale. La gaine peut aussi être conservée. Ainsi, dans le cas où l'on veut obtenir un revêtement de nitrure de titane, on conservera la gaine de titane qui sera ensuite nitrurée.

La caractéristique essentielle de l'invention provient donc de la suite spécifique des étapes constituant le procédé, et en particulier du fait que l'on réalise le gainage sur le composé de poudre élémentaire qui subit ensuite immédiatement un frittage réactif. De ce fait, en réalisant le gainage dès le début du procédé, immédiatement après l'étape initiale de mélange et de compression des poudres, il est possible de protéger le produit de l'oxydation pendant toutes les étapes de la fabrication telles que le frittage réactif au cours desquelles une oxydation est susceptible de se produire, ces étapes étant situées après le gainage et étant réalisées sur un produit gainé et protégé.

Du fait que c'est un composé de poudre gainé qui subit l'opération de frittage réactif, la porosité est limitée lors de cette opération grâce à la gaine qui crée une pression sur le produit évitant le gonflement et limitant la porosité à des valeurs faibles inférieures en général à 10 %.

De plus, les opérations de transformation à chaud réalisées dans l'étape de densification finale sont grandement facilitées, par la présence de cette gaine de préférence en matériau réfractaire : la gaine joue aussi un rôle différent de celui des gaines de l'art antérieur placées également avant le frittage réactif comme dans le brevet britannique et les articles précités de DAHMS et al., mais qui subissent préalablement à ce frittage réactif, une déformation à froid du produit gainé. La gaine doit dans le cas de l'art antérieur, permettre la déformation du compacté de poudre dans une étape supplémentaire de déformation à froid précédant le frittage réactif, tandis que dans la présente invention cette gaine empêche en fait la déformation du produit lors du frittage réactif, et subit ensuite et seulement après le frittage réactif une déformation à chaud pour éliminer le reste de porosité à haute température. Les étapes de frittage réactif et de densification finales requièrent des propriétés différentes du matériau constituant la gaine qui doit, de préférence être plus réfractaire et résister à la pression mise en oeuvre.

Dans le procédé selon l'invention, la limitation de la porosité est obtenue d'une part par la présence de la gaine lors du frittage réactif et d'autre part par la densification finale notamment par filage qui se fait après le frittage réactif et est conduit à haute température.

Ces opérations de transformation à chaud permettant un taux de déformation plus grand sont également grandement facilitées selon l'invention par la présence de la gaine et entraînent notamment dans le cas du filage l'obtention d'un matériau à microstructure plus fine que celle obtenue par déformation à froid avant le frittage. La succession spécifique des étapes du procédé selon l'invention permet de contrôler facilement les réactions chimiques mises en jeu et d'adapter aisément le procédé de l'invention selon le matériau voulu et les produits de départ. Le procédé de l'invention présente une grande flexibilité et une grande souplesse de mise en oeuvre.

A ces avantages techniques s'ajoutent également des avantages économiques liés à l'utilisation de poudres de départ peu chères, puisqu'il s'agit de poudres élémentaires dont la granulométrie peut être relativement grossière, par exemple supérieure à 15 micromètres.

Le procédé selon l'invention permet la fabrication de produits présentant une microstructure fine, une excellente aptitude à la transformation à chaud et à froid, des propriétés mécaniques ainsi que de mémoire de forme, dans certains cas, améliorées.

D'autres caractéristiques et avantages de l'invention apparaîtront mieux à la lecture de la description qui suit, donnée bien entendu à titre illustratif et non limitatif, en référence aux dessins annexés sur lesquels :
- les figures 1 et 2 déjà décrites sont des diagrammes représentant les étapes du procédé de mise en forme de matériaux intermétalliques selon l'art antérieur, et
- la figure 3 est un diagramme représentant les étapes du procédé de mise en forme de matériaux intermétalliques conforme à l'invention.

En se reportant à la figure 3, on constate que le procédé de l'invention comprend tout d'abord une étape de mélange (2) des poudres élémentaires (1) dans les proportions correspondant à la composition visée. Ces poudres qui peuvent être au nombre de deux ou plus sont choisies parmi les poudres métalliques telles que les poudres de titane, aluminium, nickel, fer, niobium, chrome, zirconium, tantale, vanadium, cuivre.... ou toute autre poudre de métal susceptible, par réaction avec un autre métal de former un composé intermétallique.

Le mélange comprend tout d'abord la pesée des poudres élémentaires. A ce stade, il est facile d'incorporer un ou plusieurs éléments additionnels pour améliorer la tenue en service de l'alliage final ; 11 peut s'agir par exemple de poudre de céramique choisie par exemple parmi les oxydes tels que Al₂O₃, Y₂O₃, ZrO₂, les borures tels que TiB₂, les carbures tels que TiC, SiC, les nitrures tels que Si₃N₄ et leurs mélanges, pour augmenter la dureté, d'un autre agent tel que Nb, Ta et W pour améliorer la tenue à l'oxydation de TiAl ou bien encore de Cr, Mn, Mo pour augmenter la ductilité de TiAl, de Fe pour diminuer les températures de transformation de phases de TiNi, de Zr et Hf pour augmenter les températures de transformation de phases de TiNi, ou de tout autre élément additionnel connu de l'homme du métier et permettant d'améliorer l'une quelconque des propriétés du produit final.

Les poudres pesées sont ensuite mélangées (2) de manière connue dans le domaine de la métallurgie des poudres dans tout appareil convenable et pendant un temps suffisant pour obtenir un mélange homogène des poudres métalliques éventuellement additionnées des éléments additionnels mentionnés ci-dessus. Le mélange est par exemple réalisé dans un appareil de type "turbulat" pendant une durée de une heure. Dans une deuxième étape, le mélange est comprimé ("compacté") (3), et éventuellement mis en forme par une opération supplémentaire. La compression du mélange de poudre (3) est une opération courante dans ce domaine de la technique et peut être réalisé par tout procédé connu de l'homme du métier, par exemple à l'aide d'une presse uniaxiale, ou d'une presse isostatique ou d'une presse à injecter.

Tout ou partie des poudres utilisées étant ductile, il est facile de donner au mélange de poudres, soit lors de l'opération de compaction elle-même à l'aide d'un moule de forme, soit encore par transformation par exemple par filage ou laminage à basse température, de préférence inférieure à 400°C, soit par usinage, une forme quelconque, par exemple celle d'une billette, de préférence ou tout autre forme souhaitée, même complexe. Par exemple, on peut soumettre le mélange de poudres à une compression isostatique dans une enveloppe en latex pour obtenir une billette.

Conformément à l'invention, le mélange de poudres comprimé ("compacté"), et éventuellement mis en forme, est soumis ensuite à une opération de gainage (4) par un matériau convenable choisi de façon à résister aux opérations ultérieures et en particulier à la densification finale réalisée à chaud : de ce fait, le matériau est choisi de préférence parmi l'acier doux, l'acier inoxydable, le titane et ses alliages.

Cette gaine est réalisée de manière classique et connue de l'homme du métier, l'épaisseur de la gaine doit d'autre part être suffisante pour résister à la pression à laquelle elle est soumise lors du frittage réactif et des opérations ultérieures. Cette épaisseur peut être facilement déterminée par l'homme du métier, et sera de préférence, pour un lingot de 50 mm, supérieure à 1 mm, de préférence encore comprise entre 3 mm et 20 mm, l'épaisseur préférée est par exemple de 10 mm.

Pour éviter ou limiter toute réaction chimique entre la gaine et le produit à réaliser, on peut enduire le compacté de poudres et/ou l'intérieur de la gaine par une barrière de diffusion qui peut être par exemple en oxyde métallique par exemple en alumine, en zircone, en yttrine, ou en nitrure de bore, ou encore en silice, ou en leurs mélanges. La barrière de diffusion peut être déposée par toute technique connue, par exemple on peut effectuer ce dépôt par peinture d'une suspension de poudre du composé formant la barrière de diffusion dans un solvant adéquate, une suspension de poudre d'alumine dans de l'alcool étant préférée.

En outre, pour éviter le refroidissement du produit pendant l'opération de densification (6) par traitement thermomécanique (filage ou laminage) et faciliter le refroidissement de la gaine, on peut intercaler entre la gaine et le produit un isolant thermique consistant en une feuille métallique ou en un feutre de fibre minérale, par exemple un feutre de fibre de silice, d'alumine ou de zircone ou de leurs mélanges, ou une feuille métallique de titane, tantale ou de tout autre matériau. Cet isolant thermique peut aussi servir de barrière de diffusion et a de préférence une épaisseur comprise entre 0,2 mm et 5 mm.

A ce stade, il est possible éventuellement de faire le vide à l'intérieur de la gaine pour éliminer toute trace d'oxygène et améliorer ainsi la pureté du produit final. La gaine est ensuite fermée par exemple par la technique connue de queusotage.

Conformément au procédé selon l'invention, et à l'ordre des étapes le caractérisant, le produit gainé subit dans une quatrième étape une opération de frittage réactif (5), c'est-à-dire que le produit avec sa gaine de protection est porté à une température suffisante pour réaliser la transformation du mélange de poudres en composé intermétallique. Cette température qui dépend du mélange de poudres traité est de préférence comprise entre 500°C et 1200°C.

La durée du traitement peut également varier et est de préférence comprise entre 0,1 et 10 heures et peut être aisément déterminée.

Le frittage réactif (5) peut également consister en un cycle de traitement comportant plusieurs phases réalisées à des températures et avec des durées différentes.

Comme déjà mentionné ci-dessus, la gaine doit être suffisamment épaisse pour résister aux efforts de pression dus à la réaction chimique : elle limite ainsi conformément à l'invention la création de porosité (porosité de Kirkendall). Le produit final aura ainsi selon l'invention une porosité inférieure à 10 %.

Du fait de la présence de la gaine, et conformément au procédé selon l'invention, le produit est protégé de l'oxydation et l'opération de frittage réactif peut donc se faire dans un four qui n'a pas un bon vide ou qui n'a pas d'atmosphère contrôlée, par exemple dans un four sous air, au contraire des procédés de l'art antérieur nécessitant des fours sous vide ou sous atmosphère inerte par exemple d'argon.

Consécutivement à l'opération de frittage réactif, le produit toujours gainé, dont la porosité a été limitée, selon le procédé de l'invention, et grâce à la présence de la gaine, à généralement moins de 10 %, subit dans une étape de densification finale (6) un ou plusieurs traitement(s) pour éliminer la porosité finale obtenue après l'opération de frittage réactif précédente. Ce traitement est, conformément à l'invention, un traitement à chaud qui permet d'obtenir en combinaison avec le frittage réactif sur le produit gainé, une élimination de la porosité nettement supérieure aux procédés de l'art antérieur, mettant en jeu une déformation à froid précédant le frittage réactif. Ainsi le produit gainé subit-il un ou plusieurs des traitement suivants donnés à titre d'exemple :
- un traitement thermomécanique qui peut consister par exemple en une ou plusieurs des opérations suivantes : filage, forgeage ou laminage, de préférence, on utilise le filage, car ce procédé permet de créer de grands taux de déformation, ce qui donne une fine microstructure,
- une compression uniaxiale ou isostatique à chaud.

Les conditions opératoires de ces traitements sont connues et/ou peuvent facilement être déterminées par l'homme du métier en fonction du composé intermétallique TiNi ou TiAl, etc. Par exemple, le filage peut être réalisé entre 1000 et 1350°C avec un rapport d'extrusion compris entre 4 et 25.

Enfin, à la suite de l'étape de densification finale (6), le produit est soumis à une opération de dégainage (7) qui peut être réalisée de toute manière connue de l'homme du métier par exemple par attaque chimique ou par usinage.

Facultativement, le produit final peut subir un traitement thermique pour donner la microstructure et les propriétés mécaniques souhaitées au produit : Ce traitement thermique est par exemple une compression isostatique à chaud ou autre dans des conditions opératoires aisément déterminées, en fonction du composé intermétallique, par l'homme du métier, dans une plage plus réduite, par exemple la compression isostatique à chaud peut être réalisée à 1200°C pendant 3 heures et à une pression de 1500 bars.

On peut également effectuer sur le produit final tous les traitements thermiques et/ou superficiels, anticorrosion etc. qui sont connus dans ce domaine de la technique.

Les exemples suivants, donnés à titre illustratif et non limitatif illustrent le procédé de l'invention.

### Exemple 1 :

Préparation et mise en forme de TiAl avec un gainage en acier doux, avec densification par filage à 1150°C et compression isostatique à chaud à 1200°C pendant 3 heures à 1500 bars.

On prépare et on met en forme un matériau intermétallique TiAl par la succession d'étapes suivantes :
1. pesée des poudres élémentaires : titane 631g, aluminium 341 g, chrome 27,4 g,
2. mélange pendant 1 heure en turbulat,
3. compression isostatique dans une enveloppe en latex afin d'obtenir une billette de diamètre 50 mm et de hauteur 120 mm,
4. gainage du comprimé de poudre par de l'acier doux épaisseur 10 mm avec une barrière de diffusion en alumine (déposée par peinture d'une suspension de poudre micronique d'alumine dans de l'alcool),
5. frittage réactif : on fait subir au produit gaine dans un four sous air le cycle suivant 600°C/4H pour que la réaction Ti+Al→TiAl ait lieu,
6. filage avec une filière diamètre 14 mm (rapport d'extrusion=14) à 1150°C,
7. enlèvement de la gaine par décapage chimique,
8. compression isostatique à chaud (CIC) 1200°C/3H/1500 bars.

Le produit ainsi réalisé présente une résistance à la flexion de 581 MPa±40 MPa.

### Exemple 2 :

Préparation et mise en forme de TiAl avec gainage en acier 316 avec densification par filage à 1225°C.

On prépare et on met en forme un matériau intermétallique TiAl par la succession d'étapes suivantes :
1. pesée des poudres élémentaires : titane 658 g, aluminium 342 g,
2. mélange pendant 1 heure en turbulat,
3. compression isostatique dans une enveloppe en latex afin d'obtenir une billette de diamètre 50 mm et de hauteur 120 mm,
4. gainage du comprimé de poudre par de l'acier 316 épaisseur 10 mm en plaçant entre la gaine et le produit un feutre silico-alumineux de 1 mm d'épaisseur,
4a.vide et queusotage,
5.frittage réactif :on fait subir au produit gainé dans un four sous air le cycle suivant 600°C/4H pour que la réaction Ti+Al→TiAl ait lieu,
6.filage avec une filière diamètre 14 mm (rapport d'extrusion=14) à 1225°C,
7.enlèvement de la gaine par usinage.

Le produit ainsi réalisé présente une résistance à la flexion de 446 MPa±47 MPa.

### Exemple 3 :

Préparation et mise en forme de TiAl avec un gainage en alliage de titane avec densification par filage à 1150°C et laminage à 1320°C.

On prépare et on met en forme un matériau intermétallique TiAl avec ajout de chrome par la succession d'étapes suivantes :
1 pesée des poudres élémentaires : titane 631 g, aluminium 341 g, chrome 27,4 g,
2. mélange pendant 1 heure en turbulat,
3. compression isostatique dans une enveloppe en latex afin d'obtenir une billette de diamètre 50 mm et de hauteur 120 mm,
4. gainage du comprimé de poudre par un alliage de titane "TA6V" et d'une épaisseur de 10 mm en plaçant entre la gaine et le produit un feutre silico-alumineux de 1 mm d'épaisseur,
5. frittage réactif : on fait subir au produit gainé dans un four sous air le cycle suivant 600°C/4H pour que la réaction Ti+Al→TiAl ait lieu,
6. filage avec une filière 35X9 mm (rapport d'extrusion=14) à 1150°C,
6a. laminage à 1320°C pour obtenir l'épaisseur 4 mm par passe de 10 % maximum,
7. enlèvement de la gaine par usinage.

### Exemple 4 :

Préparation et mise en forme de TiAl avec un gainage en acier doux et une densification par filage à 900°C.

On prépare et on met en forme un matériau intermétallique TiNi par la succession d'étapes suivantes :
1. pesée des poudres élémentaires nickel 551 g, titane 449 g,
2. mélange pendant 1 heure en turbulat,
3. compression isostatique dans une enveloppe en latex afin d'obtenir une billette de diamètre 50 mm et de hauteur 120 mm,
4. gainage du comprimé de poudre par de l'acier doux épaisseur 10 mm avec une barrière de diffusion en alumine (déposée par peinture d'une suspension de poudre micronique d'alumine dans de l'alcool),
5. frittage réactif : on fait subir au produit gaine dans un four sous air le cycle suivant : 900°C pendant 1 heure, puis 1000°C pendant 1 heure pour que la réaction Ti+Ni→TiNi ait lieu,
6. filage avec une filière de diamètre 14 mm (rapport d'extrusion=14) à 900°C,
7. enlèvement de la gaine par décapage chimique.

Les propriétés essentielles de ce produit sont :
- températures de transformation de phases : M(90 %)=25°C, M(10 %)=38°C, A(10 %)=50°C, A(90 %)=70°C
- résistance à la traction = 800 MPa
- ductilité = 45 %
- effet de mémoire de forme supérieur à 80 % pour des déformations inférieures à 4,5 %.

### Exemple 5 :

Préparation et mise en forme de TiNi avec un gainage en acier doux et une densification par compression isostatique à chaud à 1000°C pendant deux heures et à 1500 bars.

On prépare et on met en forme un matériau intermétallique TiNi avec ajout de fer par la succession d'étapes suivantes :
1. pesée des poudres élémentaires : nickel 529 g, titane 450 g, fer 21 g,
2. mélange pendant 1 heure en turbulat,
3. compression uniaxiale dans un moule d'une pièce de forme de diamètre 100 mm et de hauteur 50 mm,
4. gainage du comprimé de poudre par de l'acier doux épaisseur 8 mm avec une barrière de diffusion en alumine (déposée par peinture d'une suspension de poudre micronique d'alumine dans de l'alcool),
5. frittage réactif : on fait subir au produit gainé dans un four sous air le cycle suivant : 900°C pendant 1 heure, puis 1000°C pendant 1 heure, pour que la réaction Ti+Ni→TiNi ait lieu,
6. compression isostatique à chaud : 1000°C/2H/1500 Bars,
7. enlèvement de la gaine décapage chimique.

Les propriétés essentielles de ce produit sont :
- température de transformation de phase A(10 %)=-10°C.

### Exemple 6 :

Préparation et mise en forme de TiNi avec gainage en acier doux et densification par filage à 900°C - avec ajout d'hafnium.

On prépare et on met en forme un matériau intermétallique TiNi avec ajout d'hafnium par la succession d'étapes suivantes :
- pesée des poudres élémentaires : nickel 403 g, titane 230 g, hafnium 367 g,
- mélange pendant 1 heure en turbulat,
- compression isostatique dans une enveloppe en latex afin d'obtenir une billette de diamètre 50 mm et de hauteur 120 mm,
- gainage du comprimé de poudre par de l'acier doux épaisseur 10 mm avec une barrière de diffusion en alumine (déposée par peinture d'une suspension de poudre micronique d'alumine dans de l'alcool),
- frittage réactif : on fait subir au produit gainé dans un four sous air le cycle suivant 900°C pendant 1 heure, puis 1000°C pendant 1 heure pour que la réaction Ti+Ni→TiNi ait lieu,
- filage avec une filière diamètre 14 mm (rapport d'extrusion=14) à 900°C,
- enlèvement de la gaine par décapage chimique.

Les propriétés essentielles de ce produit sont :
- température de transformation de phases A(10 %) = 220°C.

### Exemple 7 :

Préparation et mise en forme de TiNi avec gainage en acier doux et densification par filage à 900°C avec ajout de zirconium.

On prépare et on met en forme un matériau intermétallique TiNi avec ajout de zirconium par la même succession d'étapes que dans l'exemple 6, sauf que l'on utilise 185 g de zirconium au lieu de 367 g d'hafnium dans le mélange initial de poudres élémentaires.

On obtient une température de transformation de phase A(10 %) = 180°C.

## Revendications

1. Procédé de mise en forme par frittage réactif de matériaux intermétalliques comprenant la succession d'étapes suivantes :
- préparation d'un mélange de poudres métalliques élémentaires dans les proportions voulues,
- compression du mélange de poudres élémentaires pour obtenir un comprimé de poudres élémentaires,
ce procédé étant caractérisé en ce que le comprimé de poudres élémentaires subit ensuite une opération de gainage dans une gaine résistant à la pression et à la chaleur, et en ce que le produit gainé est traité par frittage réactif dans des conditions permettant l'obtention du composé intermétallique, ce produit gainé étant ensuite soumis après le frittage réactif, à une opération de densification finale à chaud.

2. Procédé selon la revendication 1, caractérisé en ce qu'après l'opération de densification finale à chaud, la gaine est éliminée.

3. Procédé selon la revendication 1, caractérisé en ce que les poudres élémentaires sont choisies dans le groupe formé des poudres élémentaires de fer, nickel, aluminium, titane, niobium, chrome, zirconium, tantale, vanadium, cuivre.

4. Procédé selon la revendication 1, caractérisé en ce que le mélange de poudres élémentaires est préparé par pesée des poudres élémentaires dans les proportions voulues, puis par mélange proprement dit.

5. Procédé selon la revendication 1, caractérisé en ce que le mélange de poudres élémentaires comprend en outre un ou plusieurs additifs pour améliorer les propriétés de l'alliage final.

6. Procédé selon la revendication 1, caractérisé en ce que le comprimé obtenu subit immédiatement après l'étape de compression des poudres élémentaires une opération mise en forme à basse température.

7. Procédé selon la revendication 1, caractérisé en ce que la gaine est réalisée en acier doux, en acier inoxydable ou en alliage de titane.

8. Procédé selon la revendication 1, caractérisé en ce que, lors de l'étape de gainage, l'on enduit le comprimé de poudres et/ou l'intérieur de la gaine par une barrière de diffusion.

9. Procédé selon la revendication 1, caractérisé en ce que, lors de l'étape de gainage, l'on intercale entre la gaine et le comprimé de poudres un isolant thermique.

10. Procédé selon la revendication 1, caractérisé en ce que, lors de l'étape de gainage, on fait le vide à l'intérieur de la gaine et que la gaine est ensuite fermée par la technique de queusotage.

11. Procédé selon la revendication 1, caractérisé en ce que la gaine a une épaisseur d'au moins 1 mm.

12. Procédé selon la revendication 1, caractérisé en ce que le frittage réactif est réalisé dans un four sous vide à une température comprise entre 500 et 1200°C.

13. Procédé selon la revendication 1, caractérisé en ce que le frittage réactif est réalisé dans un four sous air.

14. Procédé selon la revendication 1, caractérisé en ce que la densification finale à chaud est réalisée en faisant subir au produit gainé un traitement thermomécanique et/ou une compression uniaxiale ou isostatique à chaud.

15. Procédé selon la revendication 2, caractérisé en ce que la gaine est éliminée par attaque chimique ou par usinage.

16. Procédé selon la revendication 15, caractérisé en ce que le produit dégainé subit en outre un traitement thermique supplémentaire afin d'en améliorer la microstructure et les propriétés mécaniques.

17. Procédé selon la revendication 5, caractérisé en ce que l'additif est choisi parmi les poudres céramiques, le chrome, l'hafnium, le zirconium, le niobium, le tantale, le tungstène, le manganèse, le molybdène, le fer et leurs mélanges.

18. Procédé selon la revendication 6, caractérisé en ce que la mise en forme est réalisée par compression à l'aide d'un moule de forme, par transformation à basse température, ou par usinage.

19. Procédé selon la revendication 8, caractérisé en ce que la barrière de diffusion est constituée par un matériau choisi parmi les oxydes de métaux, le nitrure de bore et leurs mélanges.

20. Procédé selon la revendication 9, caractérisé en ce que l'isolant thermique consiste en une feuille métallique ou en un feutre de fibre minérale.

21. Procédé selon la revendication 14, caractérisé en ce que ledit traitement thermomécanique consiste en un filage et/ou forgeage et/ou laminage.
